(19) Europäisches Patentamt
European Patent Office
Office européen des brevets

(11) **EP 3 925 388 B1**

(12) **EUROPEAN PATENT SPECIFICATION**

(45) Date of publication and mention
of the grant of the patent:
**21.08.2024 Bulletin 2024/34**

(21) Application number: **20756191.1**

(22) Date of filing: **14.02.2020**

(51) International Patent Classification (IPC):
**H04W 74/0833** *(2024.01)*  **H04L 5/00** *(2006.01)*
**H04L 27/26** *(2006.01)*

(52) Cooperative Patent Classification (CPC):
**H04W 74/0833; H04L 5/0053;** H04L 5/0007;
H04L 5/0094; H04L 27/261

(86) International application number:
**PCT/CN2020/075428**

(87) International publication number:
**WO 2020/164623 (20.08.2020 Gazette 2020/34)**

(54) **TERMINAL DEVICE, NETWORK DEVICE AND METHODS THEREIN**

ENDGERÄT, NETZWERKVORRICHTUNG UND VERFAHREN DARIN

DISPOSITIF TERMINAL, DISPOSITIF DE RÉSEAU ET PROCÉDÉS ASSOCIÉS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.02.2019 PCT/CN2019/075281**

(43) Date of publication of application:
**22.12.2021 Bulletin 2021/51**

(73) Proprietor: **Telefonaktiebolaget LM Ericsson
(publ)
164 83 Stockholm (SE)**

(72) Inventors:
• **HARRISON, Robert Mark**
**Grapevine, Texas 76051 (US)**
• **LIN, Zhipeng**
**Nanjing, Jiangsu 211100 (CN)**

(74) Representative: **Ericsson
Patent Development
Torshamnsgatan 21-23
164 80 Stockholm (SE)**

(56) References cited:
EP-A1- 3 573 411      EP-A1- 3 913 838
EP-A1- 3 927 063      WO-A1-2018/135631
WO-A1-2018/135631      WO-A1-2018/139575
CN-A- 108 631 971

• INTERDIGITAL: "2-Step RACH Procedure", vol.
RAN WG2, no. Chengdu, China; 20181008 -
20181012, 27 September 2018 (2018-09-27),
XP051523471, Retrieved from the Internet
<URL:http://www.3gpp.org/ftp/tsg%5Fran/WG2
%5FRL2/TSGR2%5F103bis/Docs/R2%2D181400
8%2Ezip> [retrieved on 20180927]
• ZTE CORPORATION ET AL: "New work item:
2-step RACH for NR", vol. TSG RAN, no. Sorrento,
Italy; 20181210 - 20181213, 13 December 2018
(2018-12-13), pages 1 - 5, XP051575527, Retrieved
from the Internet
<URL:http://www.3gpp.org/ftp/tsg%5Fran/TSG%
5FRAN/TSGR%5F82/Docs/RP%2D182894%2Ezi
p> [retrieved on 20181213]
• INTERDIGITAL: "2-Step RACH Procedure", 3GPP
DRAFT, R2-1814008, 27 September 2018
(2018-09-27), XP051523471, DOI:
20200409121203X

**Description**

**TECHNICAL FIELD**

The present disclosure relates to wireless communication, and more particularly, to a terminal device, a network device and methods therein.

**BACKGROUND**

Random access is performed by a terminal device, e.g., User Equipment (UE), in New Radio (NR) and Long Term Evolution (LTE) networks for accessing a new cell. Once a random access procedure is completed, a terminal device can be connected to a network device, e.g., evolved NodeB (eNB) or (next) generation NodeB (gNB), and communicate with the network device using dedicated transmissions.

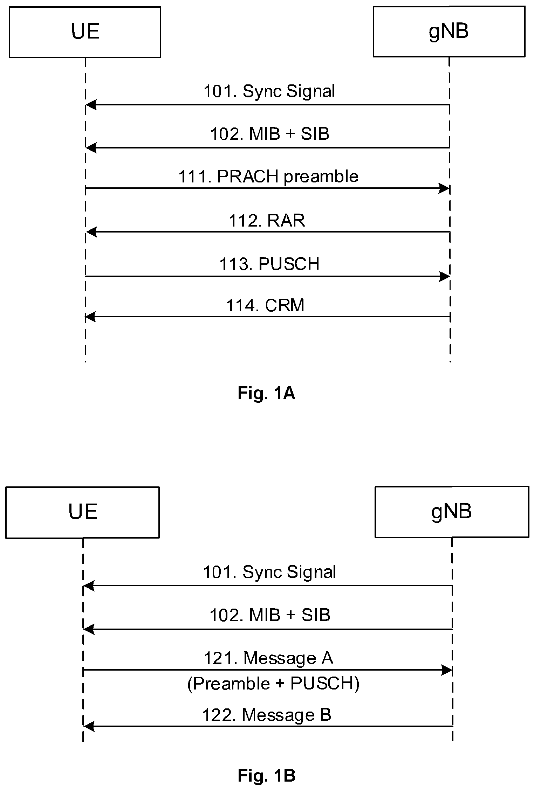

A four-step random access procedure has been defined for NR. Fig. 1A shows a signaling sequence of a four-step random access procedure. As shown, at 101, a UE detects a Synchronization Signal (SS) from a gNB. At 102, the UE decodes Master Information Block (MIB) and System Information Block (SIB) (i.e., Remaining Minimum System Information (RMSI) and Other System Information (OSI), which may be distributed over multiple physical channels such as Physical Broadcast Channel (PBCH) and Physical Downlink Shared Channel (PDSCH), to acquire random access transmission parameters. At 111, where the UE transmits a Physical Random Access Channel (PRACH) preamble, or Message 1, to the gNB. The gNB detects the Message 1 and responds with a Random Access Response (RAR), or Message 2, at 112. At 113, the UE transmits a Physical Uplink Shared Channel (PUSCH), or Message 3, to the gNB in accordance with configuration information for PUSCH transmission carried in the RAR. At 114, the gNB transmits a Contention Resolution Message, or Message 4, to the UE.

In order to minimize the number of channel accesses, which is important for e.g. operations in unlicensed frequency bands where Listen Before Talk (LBT) is required before transmission, a two-step random access procedure has also been proposed for NR. Instead of using the four steps 111 ~114, the two-step random access procedure completes random access in only two steps with two messages, which may be referred to as Message A and Message B. Fig. 1B shows a signaling sequence of a two-step random access procedure. As shown, the steps 101~102 in Fig. 1B are the same as the steps 101~102 in Fig. 1A. At 121, the UE transmits a PRACH preamble and a PUSCH in one message (i.e., Message A) to the gNB. The PUSCH may include higher layer data such as Radio Resource Control (RRC) connection request, possibly with some small additional payload. At 122, the gNB transmits Message B to the UE, including UE identifier assignment, timing advance information and Contention Resolution Message (CRM), etc.

In the four-step random access procedure as shown in Fig. 1A, the resource, including time domain resource and frequency domain resource, for PUSCH (i.e., Message 3) is indicated in the RAR (i.e., Message 2). In particular, the RAR contains an uplink grant including a 14-bit "PUSCH frequency resource allocation" field indicating the frequency domain resource for PUSCH and a 4-bit "PUSCH time resource allocation" field indicating the time domain resource for PUSCH. For details of the uplink grant in the RAR, reference can be made to Sections 8.2 and 8.3 of the 3$^{rd}$ Generation Partnership Project (3GPP) Technical Specification (TS) 38.213, V15.4.0. However, in the two-step random access procedure as shown in Fig. 1B, there is no Message 2 before the UE transmits the PUSCH (in Message A). In this case, it is desired to determine the resource for PUSCH in the two-step random access procedure.

Document EP 3 913 838 A1 constitutes prior art under Article 54(3) EPC and discloses an information transmission method during random access and a terminal. The method comprises obtaining pre-set mapping between a physical uplink shared channel (PUSCH) resource and a physical random access channel (PRACH) resource, according to the pre-set mapping, transmitting a random access message on random access resources, wherein the random access resources include the PUSCH resource and the PRACH resource.

Document EP 3 927 063 A1 constitutes prior art under Article 54(3) EPC and discloses an information transmission method, apparatus and device. The method includes sending an MsgA of a 2-step RA procedure to a network device according to a mapping relationship between a preamble parameter in the MsgA and a PUSCH parameter in the MsgA, wherein the preamble parameter includes a preamble index and a PRACH time-frequency resource, and the PUSCH parameter includes a PUSCH time-frequency resource and a PUSCH DMRS.

Document "2-Step RACH Procedure", InterDigital, 3GPP draft, R2-1814008, discloses considerations for the 2-step RA procedure in NR-U. The following proposals were made. Proposal 1: 2-step RACH procedure is applicable in RRC_IDLE, RRC_INACTIVE, and RRC_CONNECTED states. FFS: cases for which usage of 2-step RACH is restricted. Proposal 2: Essential parameters for 2-step RACH are broadcast in the cell's SI, including: PRACH resources and/or preambles applicable for 2-step RACH, and an association between PRACH preambles/resources and PUSCH resources. Proposal 3: For a RA initiated by PDCCH order, the UE may receive L1 signalling indicating the selection between 2-step or 4-step RA procedure. Proposal 4: The UE may receive L1 signalling indicating additional PRACH and PUSCH resources for 2-step RACH. Proposal 5: A 2-step RACH procedure supports inclusion of a data payload part of the first message. Proposal 6: The UE receives acknowledgement in the second message for data transmitted in the first message of a 2-step RACH procedure. Proposal 7: The UE falls back to 4-step RACH procedure when it receives only a RAR in the second message. Proposal 8: All PRACH resource (preambles, PRBs) are applicable for 4-step RACH, irrespective of whether or not 2-step RACH is configured on them.

Document WO 2018/135631 A1 (and its post-published patent family member EP 3 573 411 A1) disclose a terminal apparatus that includes a higher layer processing unit configured to control a step-random access procedure, and a transmitter configured to transmit, as a first step of the 2 step-random access procedure, a random access preamble and data, in which the data include information relating to the random access preamble, and the information relating to the random access preamble includes some or all of following information A to information C: Information A for indicating an index of the random access preamble, Information B for indicating a resource for transmission of the random access preamble, and Information C relating to a sequence of the random access preamble.

## SUMMARY

It is an object of the present disclosure to provide a terminal device, a network device and methods therein, capable of determining a resource for PUSCH in a two-step random access procedure.

According to present disclosure, methods, computer-readable storage media, a terminal device and a network device according to the independent claims are provided. Developments are set forth in the dependent claims.

According to a first aspect of the present disclosure, a method in a terminal device according to claim 1 is provided.

According to a second aspect of the present disclosure, a terminal device is provided. The terminal device includes a transceiver, a processor and a memory. The memory contains instructions executable by the processor whereby the terminal device is operative to perform the method according to the above first aspect.

According to a third aspect of the present disclosure, a computer readable storage medium is provided. The computer readable storage medium has computer program instructions stored thereon. The computer program instructions, when executed by a processor in a terminal device, cause the terminal device to perform the method according to the above first aspect. According to a fourth aspect of the present disclosure, a method in a network device according to claim 9 is provided.

According to a fifth aspect of the present disclosure, a network device is provided.

The network device includes a transceiver, a processor and a memory. The memory contains instructions executable by the processor whereby the network device is operative to perform the method according to the above fourth aspect.

According to a sixth aspect of the present disclosure, a computer readable storage medium is provided. The computer readable storage medium has computer program instructions stored thereon. The computer program instructions, when executed by a processor in a network device, cause the network device to perform the method according to the above fourth aspect.

With the embodiments of the present disclosure, the resource for PUSCH in the two-step random access procedure can be determined, such that the PUSCH can be transmitted and/or received properly.

## BRIEF DESCRIPTION OF THE DRAWINGS

The above and other objects, features and advantages will be more apparent from the following description of embodiments with reference to the figures, in which:

Fig. 1A    is a sequence diagram showing a four-step random access procedure;
Fig. 1B    is a sequence diagram showing a two-step random access procedure;
Fig. 2    is a flowchart illustrating a method in a terminal device according to an embodiment of the present disclosure;
Fig. 3    is a flowchart illustrating a method in a network device according to another embodiment of the present disclosure;
Fig. 4    is a block diagram of a terminal device according to a nonclaimed embodiment of the present disclosure;
Fig. 5    is a block diagram of a terminal device according to another embodiment of the present disclosure;
Fig. 6    is a block diagram of a network device according to a nonclaimed embodiment of the present disclosure;
Fig. 7    is a block diagram of a network device according to another embodiment of the present disclosure;
Fig. 8    schematically illustrates a telecommunication network connected via an intermediate network to a host computer;
Fig. 9    is a generalized block diagram of a host computer communicating via a base station with a user equipment over a partially wireless connection; and

Figs. 10 to 13     are flowcharts illustrating methods implemented in a communication system including a host computer, a base station and a user equipment.

## DETAILED DESCRIPTION

As used herein, the term "wireless communication network" refers to a network following any suitable communication standards, such as NR, LTE-Advanced (LTE-A), LTE, Wideband Code Division Multiple Access (WCDMA), High-Speed Packet Access (HSPA), and so on. Furthermore, the communications between a terminal device and a network device in the wireless communication network may be performed according to any suitable generation communication protocols, including, but not limited to, Global System for Mobile Communications (GSM), Universal Mobile Telecommunications System (UMTS), Long Term Evolution (LTE), and/or other suitable 1G (the first generation), 2G (the second generation), 2.5G, 2.75G, 3G (the third generation), 4G (the fourth generation), 4.5G, 5G (the fifth generation) communication protocols, wireless local area network (WLAN) standards, such as the IEEE 802.11 standards; and/or any other appropriate wireless communication standard, such as the Worldwide Interoperability for Microwave Access (WiMax), Bluetooth, and/or ZigBee standards, and/or any other protocols either currently known or to be developed in the future.

The term "network node" or "network device" refers to a device in a wireless communication network via which a terminal device accesses the network and receives services therefrom. The network node or network device refers to a base station (BS), an access point (AP), or any other suitable device in the wireless communication network. The BS may be, for example, a node B (NodeB or NB), an evolved NodeB (eNodeB or eNB), or gNB, a Remote Radio Unit (RRU), a radio header (RH), a remote radio head (RRH), a relay, a low power node such as a femto, a pico, and so forth. Yet further examples of the network device may include multi-standard radio (MSR) radio equipment such as MSR BSs, network controllers such as radio network controllers (RNCs) or base station controllers (BSCs), base transceiver stations (BTSs), transmission points, transmission nodes. More generally, however, the network device may represent any suitable device (or group of devices) capable, configured, arranged, and/or operable to enable and/or provide a terminal device access to the wireless communication network or to provide some service to a terminal device that has accessed the wireless communication network.

The term "terminal device" refers to any end device that can access a wireless communication network and receive services therefrom. By way of example and not limitation, the terminal device refers to a mobile terminal, user equipment (UE), or other suitable devices. The UE may be, for example, a Subscriber Station (SS), a Portable Subscriber Station, a Mobile Station (MS), or an Access Terminal (AT). The terminal device may include, but not limited to, portable computers, desktop computers, image capture terminal devices such as digital cameras, gaming terminal devices, music storage and playback appliances, a mobile phone, a cellular phone, a smart phone, voice over IP (VoIP) phones, wireless local loop phones, tablets, personal digital assistants (PDAs), wearable terminal devices, vehicle-mounted wireless terminal devices, wireless endpoints, mobile stations, laptop-embedded equipment (LEE), laptop-mounted equipment (LME), USB dongles, smart devices, wireless customer-premises equipment (CPE) and the like. In the following description, the terms "terminal device", "terminal", "user equipment" and "UE" may be used interchangeably. As one example, a terminal device may represent a UE configured for communication in accordance with one or more communication standards promulgated by the 3rd Generation Partnership Project (3GPP), such as 3GPP's GSM, UMTS, LTE, and/or 5G standards. As used herein, a "user equipment" or "UE" may not necessarily have a "user" in the sense of a human user who owns and/or operates the relevant device. In some embodiments, a terminal device may be configured to transmit and/or receive information without direct human interaction. For instance, a terminal device may be designed to transmit information to a network on a predetermined schedule, when triggered by an internal or external event, or in response to requests from the wireless communication network. Instead, a UE may represent a device that is intended for sale to, or operation by, a human user but that may not initially be associated with a specific human user.

The terminal device may support device-to-device (D2D) communication, for example by implementing a 3GPP standard for sidelink communication, and may in this case be referred to as a D2D communication device.

As yet another example, in an Internet of Things (IOT) scenario, a terminal device may represent a machine or other device that performs monitoring and/or measurements, and transmits the results of such monitoring and/or measurements to another terminal device and/or network equipment. The terminal device may in this case be a machine-to-machine (M2M) device, which may in a 3GPP context be referred to as a machine-type communication (MTC) device. As one particular example, the terminal device may be a UE implementing the 3GPP narrow band internet of things (NB-IoT) standard. Particular examples of such machines or devices are sensors, metering devices such as power meters, industrial machinery, or home or personal appliances, for example refrigerators, televisions, personal wearables such as watches etc. In other scenarios, a terminal device may represent a vehicle or other equipment that is capable of monitoring and/or reporting on its operational status or other functions associated with its operation.

As used herein, a downlink transmission refers to a transmission from a network device to a terminal device, and an uplink transmission refers to a transmission in an opposite direction.

References in the specification to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first" and "second" etc. may be used herein to describe various elements, these elements should not be limited by these terms. These terms are only used to distinguish one element from another. For example, a first element could be termed a second element, and similarly, a second element could be termed a first element, without departing from the scope of example embodiments. As used herein, the term "and/or" includes any and all combinations of one or more of the associated listed terms.

The terminology used herein is for the purpose of describing particular embodiments only and is not intended to be liming of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

In the following description and claims, unless defined otherwise, all technical and scientific terms used herein have the same meaning as commonly understood by one of ordinary skills in the art to which this disclosure belongs.

In the four-step random access procedure, the "PUSCH time resource allocation" field in the RAR indicates a row index of a time domain resource allocation table.

The time domain resource allocation table is described in Section 6.1.2.1.1 in 3GPP TS 38.214 V15.4.0.

According to Table 6.1.2.1.1-1 in TS 38.214, a PUSCH scheduled by RAR will use a Default PUSCH time domain resource allocation A when there is no PUSCH time domain resource allocation (*pusch-TimeDomainAllocation-List*) defined in *pusch-ConfigCommon* in System Information Block Type 1 (SIB1); or otherwise the PUSCH time domain resource allocation defined in SIB1 will be used.

Table 6.1.2.1.1-2 in TS 38.214, reproduced below as Table 1, defines Default PUSCH time domain resource allocation A for normal CP.

Table 1

| Row index | PUSCH mapping type | $K_2$ | S | L |
|---|---|---|---|---|
| 1 | Type A | $j$ | 0 | 14 |
| 2 | Type A | $j$ | 0 | 12 |
| 3 | Type A | $j$ | 0 | 10 |
| 4 | Type B | $j$ | 2 | 10 |
| 5 | Type B | $j$ | 4 | 10 |
| 6 | Type B | $j$ | 4 | 8 |
| 7 | Type B | $j$ | 4 | 6 |
| 8 | Type A | $j+1$ | 0 | 14 |
| 9 | Type A | $j+1$ | 0 | 12 |
| 10 | Type A | $j+1$ | 0 | 10 |
| 11 | Type A | $j+2$ | 0 | 14 |
| 12 | Type A | $j+2$ | 0 | 12 |
| 13 | Type A | $j+2$ | 0 | 10 |
| 14 | Type B | $j$ | 8 | 6 |
| 15 | Type A | $j+3$ | 0 | 14 |
| 16 | Type A | $j+3$ | 0 | 10 |

Table 6.1.2.1.1-3 in TS 38.214, reproduced below as Table 2, defines Default PUSCH time domain resource allocation A for extended CP.

Table 2

| Row index | PUSCH mapping type | $K_2$ | S | L |
|---|---|---|---|---|
| 1 | Type A | $j$ | 0 | 8 |
| 2 | Type A | $j$ | 0 | 12 |
| 3 | Type A | $j$ | 0 | 10 |
| 4 | Type B | $j$ | 2 | 10 |
| 5 | Type B | $j$ | 4 | 4 |
| 6 | Type B | $j$ | 4 | 8 |
| 7 | Type B | $j$ | 4 | 6 |
| 8 | Type A | $j+1$ | 0 | 8 |
| 9 | Type A | $j+1$ | 0 | 12 |
| 10 | Type A | $j+1$ | 0 | 10 |
| 11 | Type A | $j+2$ | 0 | 6 |
| 12 | Type A | $j+2$ | 0 | 12 |
| 13 | Type A | $j+2$ | 0 | 10 |
| 14 | Type B | $j$ | 8 | 4 |
| 15 | Type A | $j+3$ | 0 | 8 |
| 16 | Type A | $j+3$ | 0 | 10 |

In Table 1 and Table 2:

"PUSCH mapping type" indicates whether a slot-based PUSCH resource allocation (Type A) or a mini-slot-based PUSCH resource allocation (Type B) is used;
$K_2$ value is a slot level offset relative to the slot in which a corresponding RAR is received;
S value is the start symbol number within a slot where the PUSCH is to be allocated; and
L value is the duration (i.e., the number of OFDM symbols) of the PUSCH in the slot.

In Table 1 and Table 2, j is a Sub-Carrier Spacing (SCS) specific value defined in Table 6.1.2.1.1-4 in TS 38.214, reproduced below as Table 3, where $\mu_{PUSCH}$ is the SCS for PUSCH.

Table 3

| $\mu_{PUSCH}$ | $j$ |
|---|---|
| 0 | 1 |
| 1 | 1 |
| 2 | 2 |
| 3 | 3 |

Table 6.1.2.1.1-5 in TS 38.214 defines an additional SCS specific slot delay value for the first transmission of PUSCH scheduled by RAR. When a UE transmits a PUSCH scheduled by RAR, a $\Delta$ value specific to $\mu_{PUSCH}$ is applied in addition to the $K_2$ value.
For details of the above tables, reference can be made to Section 6.1.2.1.1 in TS 38.214 and description thereof will be omitted here.
Therefore, in the four-step random access procedure, when a UE receives a RAR that ends at slot *n* for a corresponding PRACH preamble from the UE, the UE transmits the PUSCH in slot $n+K_2+\Delta$.

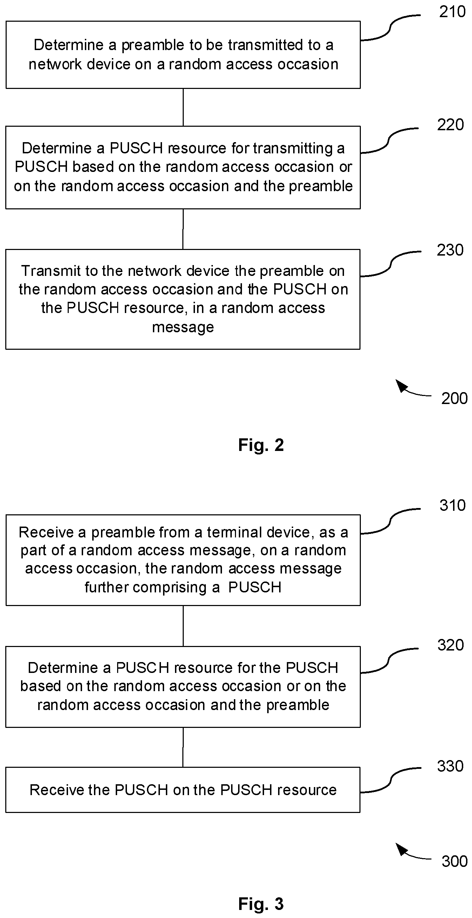

Fig. 2 is a flowchart illustrating a method 200 according to an embodiment of the present disclosure. The method 200 can be performed at a terminal device, e.g., a UE.

At block 210, a preamble to be transmitted to a network device (e.g., a gNB) on a random access occasion is determined. Here, a random access occasion, or particularly PRACH occasion, refers to the time-frequency resource for transmission of the PRACH preamble.

At block 220, a PUSCH resource (in time domain and/or frequency domain) for transmitting a PUSCH is determined based at least on the random access occasion. In some embodiments, the PUSCH resource may be determined based on the random access occasion and the preamble.

At block 230, the preamble and the PUSCH are transmitted on the random access occasion and the PUSCH resource, respectively, in a random access message. In particular, the random access message is a message (i.e., Message A) in a two-step random access procedure.

In some embodiments, the operation performed in block 210 or 220 may not be explicitly/ separately performed. Rather, the operation may be implicitly included in the transmitting operation as performed in block 230.

In an example, a PUSCH resource can be mapped to a random access occasion. In the block 220, a time domain resource for the PUSCH can be determined based on a mapping between the time domain resource for the PUSCH and the random access occasion. Similarly, in the block 220, a frequency domain resource for the PUSCH can be determined based on a mapping between the frequency domain resource for the PUSCH and the random access occasion.

In another example, a set of PUSCH resources can be associated with a random access occasion and each of the set of PUSCH resources can be mapped to a preamble transmitted on the random access occasion. In the block 220, a time domain resource for the PUSCH can be determined from a set of time domain resources associated with the random access occasion based on the preamble. Similarly, in the block 220, a frequency domain resource for the PUSCH can be determined from a set of frequency domain resources associated with the random access occasion based on the preamble. For example, each of the set of time (or frequency) domain resources can have a resource identifier (Resource_ID) and the preamble has a preamble identifier (Preamble_ID), and the mapping between the set of time (or frequency) domain resources and the preambles can be represented as:

$$\text{Resource\_ID mod } M_P = \text{Preamble\_ID mod } M_R \qquad (1)$$

where $M_P$ is the maximum number of preambles that can be transmitted on the random access occasion and $M_R$ is the maximum number of resource IDs for the random access occasion.

It can be appreciated by those skilled in the art that the set of time domain resources and the set of frequency domain resources may be considered jointly as a set of time-frequency resources. The above Equation (1) is also applicable when Resource_ID denotes a resource identifier for a time-frequency resource. Here, the set of time-frequency resources can be multiplexed with the random access occasion in a time division manner and multiplexed with each other in a time division, a frequency division and/or a code divisional manner.

In an example, the frequency domain resource for the PUSCH can be determined further based on a frequency hopping configuration (e.g., enabled or disabled) for the PUSCH. The frequency hopping configuration may be predetermined by default or received from the network device via RRC signaling.

In the frequency domain, the PUSCH can occupy a fixed number of sub-carriers, and a fixed sub-carrier offset can be assumed between the lowest sub-carrier in the random access occasion and the lowest sub-carrier of the PUSCH.

In an embodiment, in the block 220, a time domain resource for the PUSCH is determined based on a mapping between the preamble and:

a PUSCH mapping type (e.g., Type A or Type B),
an offset relative to a time reference dependent on the random access occasion,
a start symbol number of the PUSCH within a slot, and
a duration of the PUSCH in the slot.

Here, the mapping can be predetermined by default. For example, the above Tables 1-3 can be reused, with $K_2$ redefined as the offset relative to the time reference, S denoting the start symbol number, and L denoting the duration of the PUSCH. For example, the time domain resource for the PUSCH can be determined based on a row index (Row_Index) in Table 1 or 2 that can be calculated as:

$$\text{Row\_Index} = \text{Preamble\_ID mod } N_L \qquad (2)$$

where $N_L$ is the number of rows in the table.

Alternatively, the mapping can be received from the network device via RRC signaling. The RRC signaling may include a SIB and/or a dedicated signaling message. For example, the mapping can be *pusch-TimeDomainAllocationList* defined in *pusch-ConfigCommon* in SIB1, as specified in TS 38.214.

Here, the time reference may be a slot used for the random access occasion, e.g., the last slot used for the random access occasion. Alternatively, the time reference may be one of a set of periodically occurring time instants that is selected based on its time distance from the random access occasion, e.g., one of the set of periodically occurring time instants that is closest to the random access occasion.

As an example, the set of periodically occurring time instants can be characterized by a periodicity and a time offset, and can be generated in a similar manner to the time instants containing a configured grant transmission as described in 3GPP TS 38.321, V15.4.0. For example, the N-th uplink grant occurs in association with the symbol for which:

$$[(SFN \times \textit{numberOfSlotsPerFrame} \times \textit{numberOfSymbolsPerSlot}) + (\text{slot number in the frame} \times \textit{numberOfSymbolsPerSlot}) + \text{symbol number in the slot}] = (\textit{timeDomainOffset} \times \textit{numberOfSymbolsPerSlot} + S + N \times \textit{periodicity}) \text{ modulo } (1024 \times \textit{numberOfSlotsPerFrame} \times \textit{numberOfSymbolsPerSlot}) \tag{3}$$

where SFN denotes the system frame number; *numberOfSlotsPerFrame, numberOfSymbolsPerSlot* correspond to the variables $N_{\text{slot}}^{\text{frame},\mu}$ and $N_{\text{symb}}^{\text{slot}}$ in 3GPP TS 38.211, Section 4.3.2, respectively; 'slot number in the frame' corresponds to the variable ns in 3GPP TS 38.211, Section 4.3.2; 'symbol number in the slot' corresponds to the variable $n_{\text{s,f}}^{\mu}$ in 3GPP TS 38.211, Section 4.3.2; *periodicity denotes* the periodicity of the predetermined time instants; and *timeDomain-Offsetis* the time offset of the predetermined time instants.

In an example, in the block 220, the PUSCH resource can be determined further based on one or more of:

> a combined duration of the preamble and the PUSCH (i.e., duration of Message A),
> a service type (e.g., Ultra-Reliable Low Latency Communication (URLLC), enhanced Mobile Broad Band (eMBB) or massive Machine Type Communication (mMTC)) or use case,
> a PUSCH resource used previously,
> an SCS and a CP length for the PUSCH, or
> a frequency band in operation.

For example, when the terminal device is operating in unlicensed bands, a short duration of Message A would be preferred. For URLLC service, a small time gap between the PUSCH and the preamble would be preferred to achieve low latency of Message A, while for eMBB or mMTC service, the time gap could be relatively large. Further, in case of a random access failure on the PUSCH resource used previously, a different PUSCH resource would be preferred for this time.

Fig. 3 is a flowchart illustrating a method 300 according to an embodiment of the present disclosure. The method 300 can be performed in a network device, e.g., a gNB.

At block 310, a preamble from a terminal device, as a part of a random access message, is received on a random access occasion. The random access message further includes a PUSCH. In particular, the random access message can be a message (i.e., Message A) in a two-step random access procedure.

At block 320, a PUSCH resource for the PUSCH is determined based at least on the random access occasion. In some embodiments, the PUSCH resource may be determined based on the random access occasion and the preamble.

In an example, in the block 320, a time domain resource for the PUSCH can be determined based on a mapping between the time domain resource for the PUSCH and the random access occasion. Similarly, in the block 320, a frequency domain resource for the PUSCH can be determined based on a mapping between the frequency domain resource for the PUSCH and the random access occasion.

In another example, in the block 320, a time domain resource for the PUSCH can be determined from a set of time domain resources associated with the random access occasion based on the preamble. Similarly, in the block 320, a frequency domain resource for the PUSCH can be determined from a set of frequency domain resources associated with the random access occasion based on the preamble.

The set of time domain resources and the set of frequency domain resources may be considered jointly as a set of time-frequency resources. Here, the set of time-frequency resources can be multiplexed with the random access occasion in a time division manner and multiplexed with each other in a time division, a frequency division and/or a code divisional manner.

In an example, the frequency domain resource for the PUSCH can be determined further based on a frequency hopping configuration (e.g., enabled or disabled) for the PUSCH. The frequency hopping configuration may be predetermined by default. Alternatively, the method 300 can further include a step of transmitting the frequency hopping configuration to the terminal device via RRC signaling.

In an embodiment, in the block 320, a time domain resource for the PUSCH is determined based on a mapping between the preamble and:

a PUSCH mapping type,
an offset relative to a time reference dependent on the random access occasion,
a start symbol number of the PUSCH within a slot, and
a duration of the PUSCH in the slot.

Here, the mapping can be predetermined by default. As described above in connection with the block 220 in Fig. 2, Tables 1-3 can be reused with $K_2$ redefined. Alternatively, the method 300 can further include a step of transmitting to the terminal device the mapping via RRC signaling. The RRC signaling may include a SIB and/or a dedicated signaling message.

Here, the time reference may be a slot used for the random access occasion, e.g., the last slot used for the random access occasion. Alternatively, the time reference may be one of a set of periodically occurring time instants that is selected based on its time distance from the random access occasion, e.g., one of the set of periodically occurring time instants that is closest to the random access occasion.

In an example, in the block 320, the PUSCH resource can be determined further based on one or more of:

a combined duration of the preamble and the PUSCH (i.e., duration of Message A),
a service type (e.g., URLLC, eMBB or mMTC) or use case,
an SCS and a CP length for the PUSCH, or
a frequency band in operation.

The operation in the block 320 corresponds to the operation in the block 220 performed at the terminal device. Thus, for further details of the operation in the block 320, reference can be made to the block 220 as described above.

At block 330, the PUSCH is received on the PUSCH resource.

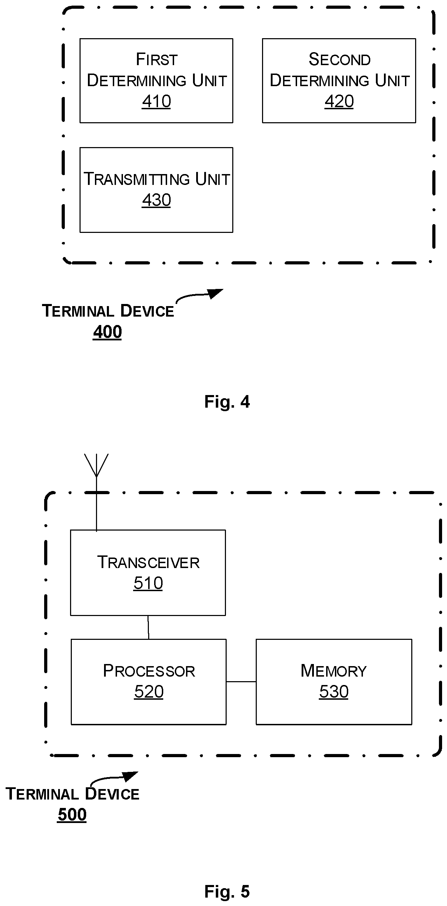

Correspondingly to the method 200 as described above, a terminal device is provided. Fig. 4 is a block diagram of a terminal device 400 according to a non-claimed embodiment of the present disclosure.

As shown in Fig. 4, the terminal device 400 includes a first determining unit 410 configured to determine a preamble to be transmitted to a network device on a random access occasion. The terminal device 400 further includes a second determining unit 420 configured to determine a PUSCH resource for transmitting a PUSCH based on the random access occasion or on the random access occasion and the preamble. The terminal device 400 further includes a transmitting unit 430 configured to transmit to the network device the preamble on the random access occasion and the PUSCH on the PUSCH resource, in a random access message.

In an embodiment, the second determining unit 420 can be configured to determine a time domain resource for the PUSCH based on a mapping between the time domain resource for the PUSCH and the random access occasion.

In an embodiment, the second determining unit 420 can be configured to determine a time domain resource for the PUSCH based on a mapping between the preamble and: a PUSCH mapping type, an offset relative to a time reference dependent on the random access occasion, a start symbol number of the PUSCH within a slot, and a duration of the PUSCH in the slot.

In an embodiment, the time reference may include: a slot used for the random access occasion, or one of a set of periodically occurring time instants that is selected based on its time distance from the random access occasion.

In an embodiment, the slot used for the random access occasion may be the last slot used for the random access occasion, or the one time instant may be one of the set of periodically occurring time instants that is closest to the random access occasion.

In an embodiment, the mapping may be predetermined by default, or received from the network device via RRC signaling. The RRC signaling may include a SIB and/or a dedicated signaling message.

In an embodiment, the second determining unit 420 can be configured to determine, from a set of time domain resources associated with the random access occasion, a time domain resource for the PUSCH based on the preamble.

In an embodiment, the second determining unit 420 can be configured to determine a frequency domain resource for the PUSCH based on a mapping between the frequency domain resource for the PUSCH and the random access occasion.

In an embodiment, the second determining unit 420 can be configured to determine, from a set of frequency domain resources associated with the random access occasion, a frequency domain resource for the PUSCH based on the preamble.

In an embodiment, the frequency domain resource for the PUSCH may be determined further based on a frequency hopping configuration for the PUSCH. The frequency hopping configuration may be predetermined by default or received from the network device via RRC signaling.

In an embodiment, the set of time domain resources and the set of frequency domain resources may constitute a set of time-frequency resources that are multiplexed with the random access occasion in a time division manner and multiplexed with each other in a time division, a frequency division and/or a code divisional manner.

In an embodiment, the PUSCH resource may be determined further based on one or more of: a combined duration of the preamble and the PUSCH, a service type/ use case, a PUSCH resource used previously, an SCS and a CP length for the PUSCH, or a frequency band in operation.

In an embodiment, the random access message may be a message in a two-step random access procedure.

The units 410-430 can be implemented as a pure hardware solution or as a combination of software and hardware, e.g., by one or more of: a processor or a micro-processor and adequate software and memory for storing of the software, a Programmable Logic Device (PLD) or other electronic component(s) or processing circuitry configured to perform the actions described above, and illustrated, e.g., in Fig. 2.

Fig. 5 is a block diagram of a terminal device 500 according to another embodiment of the present disclosure.

The terminal device 500 includes a transceiver 510, a processor 520 and a memory 530. The memory 530 contains instructions executable by the processor 520 whereby the terminal device 500 is operative to perform the actions, e.g., of the procedure described earlier in conjunction with Fig. 2. Particularly, the memory 530 contains instructions executable by the processor 520 whereby the terminal device 500 is operative to determine a preamble to be transmitted to a network device on a random access occasion; determine a PUSCH resource for transmitting a PUSCH based on the random access occasion or on the random access occasion and the preamble; and transmit to the network device the preamble on the random access occasion and the PUSCH on the PUSCH resource, in a random access message.

In an embodiment, the operation of determining the PUSCH resource may include determining a time domain resource for the PUSCH based on a mapping between the time domain resource for the PUSCH and the random access occasion.

In an embodiment, the operation of determining the PUSCH resource includes determining a time domain resource for the PUSCH based on a mapping between the preamble and: a PUSCH mapping type, an offset relative to a time reference dependent on the random access occasion, a start symbol number of the PUSCH within a slot, and a duration of the PUSCH in the slot.

In an embodiment, the time reference may include: a slot used for the random access occasion, or one of a set of periodically occurring time instants that is selected based on its time distance from the random access occasion.

In an embodiment, the slot used for the random access occasion may be the last slot used for the random access occasion, or the one time instant may be one of the set of periodically occurring time instants that is closest to the random access occasion.

In an embodiment, the mapping may be predetermined by default, or received from the network device via RRC signaling. The RRC signaling may include a SIB and/or a dedicated signaling message.

In an embodiment, the operation of determining the PUSCH resource may include determining, from a set of time domain resources associated with the random access occasion, a time domain resource for the PUSCH based on the preamble.

In an embodiment, the operation of determining the PUSCH resource may include determining a frequency domain resource for the PUSCH based on a mapping between the frequency domain resource for the PUSCH and the random access occasion.

In an embodiment, the operation of determining the PUSCH resource may include determining, from a set of frequency domain resources associated with the random access occasion, a frequency domain resource for the PUSCH based on the preamble.

In an embodiment, the frequency domain resource for the PUSCH may be determined further based on a frequency hopping configuration for the PUSCH. The frequency hopping configuration may be predetermined by default or received from the network device via RRC signaling.

In an embodiment, the set of time domain resources and the set of frequency domain resources may constitute a set of time-frequency resources that are multiplexed with the random access occasion in a time division manner and multiplexed with each other in a time division, a frequency division and/or a code divisional manner.

In an embodiment, the PUSCH resource may be determined further based on one or more of: a combined duration of the preamble and the PUSCH, a service type/ use case, a PUSCH resource used previously, an SCS and a CP length for the PUSCH, or a frequency band in operation.

In an embodiment, the random access message is a message in a two-step random access procedure.

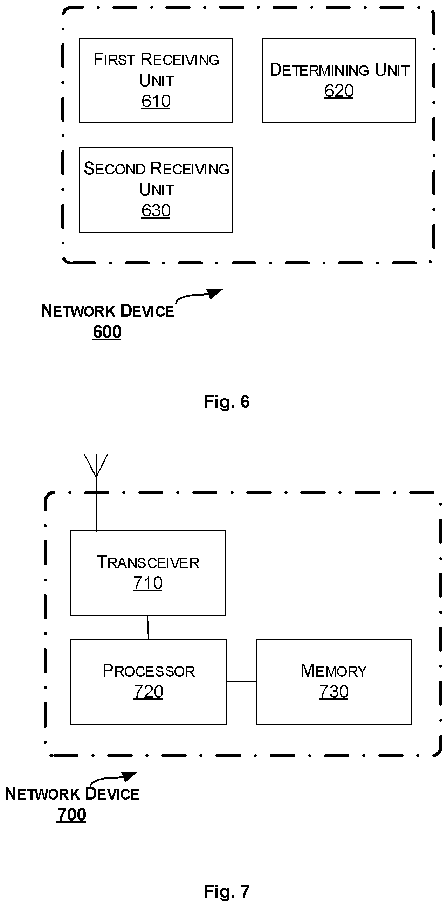

Correspondingly to the method 300 as described above, a network device is provided. Fig. 6 is a block diagram of a network device 600 according to a non-claimed embodiment of the present disclosure.

As shown in Fig. 6, the network device 600 includes a first receiving unit 610 configured to receive a preamble from a terminal device, as a part of a random access message, on a random access occasion, the random access message further including a PUSCH. The network device 600 further includes a determining unit 620 configured to determine a PUSCH resource for the PUSCH based on the random access occasion or on the random access occasion and the preamble. The network device 600 further includes a second receiving unit 630 configured to receive the PUSCH on the PUSCH resource.

In an embodiment, the determining unit 620 can be configured to determine a time domain resource for the PUSCH based on a mapping between the time domain resource for the PUSCH and the random access occasion.

In an embodiment, the determining unit 620 can be configured to determine a time domain resource for the PUSCH based on a mapping between the preamble and: a PUSCH mapping type, an offset relative to a time reference dependent on the random access occasion, a start symbol number of the PUSCH within a slot, and a duration of the PUSCH in the slot.

In an embodiment, the time reference may include: a slot used for the random access occasion, or one of a set of periodically occurring time instants that is selected based on its time distance from the random access occasion.

In an embodiment, the slot used for the random access occasion may be the last slot used for the random access occasion, or the one time instant may be one of the set of periodically occurring time instants that is closest to the random access occasion.

In an embodiment, the mapping may be predetermined by default.

In an embodiment, the network device 600 may further include a unit configured to transmit to the terminal device the mapping via RRC signaling. The RRC signaling may include a SIB and/or a dedicated signaling message.

In an embodiment, the PUSCH resource may be determined further based on one or more of: a combined duration of the preamble and the PUSCH, a service type/ use case, an SCS and a CP length for the PUSCH, or a frequency band in operation.

In an embodiment, the determining unit 620 can be configured to determine, from a set of time domain resources associated with the random access occasion, a time domain resource for the PUSCH based on the preamble.

In an embodiment, the determining unit 620 can be configured to determine a frequency domain resource for the PUSCH based on a mapping between the frequency domain resource for the PUSCH and the random access occasion.

In an embodiment, the determining unit 620 can be configured to determine, from a set of frequency domain resources associated with the random access occasion, a frequency domain resource for the PUSCH based on the preamble.

In an embodiment, the frequency domain resource for the PUSCH may be determined further based on a frequency hopping configuration for the PUSCH.

In an embodiment, the frequency hopping configuration may be predetermined by default.

In an embodiment, the network device 600 may further include a unit configured to transmit the frequency hopping configuration to the terminal device via RRC signaling.

In an embodiment, the set of time domain resources and the set of frequency domain resources may constitute a set of time-frequency resources that are multiplexed with the random access occasion in a time division manner and multiplexed with each other in a time division, a frequency division and/or a code divisional manner.

In an embodiment, the random access message may be a message in a two-step random access procedure.

The units 610-630 can be implemented as a pure hardware solution or as a combination of software and hardware, e.g., by one or more of: a processor or a micro-processor and adequate software and memory for storing of the software, a Programmable Logic Device (PLD) or other electronic component(s) or processing circuitry configured to perform the actions described above, and illustrated, e.g., in Fig. 3.

Fig. 7 is a block diagram of a network device 700 according to another embodiment of the present disclosure.

The network device 700 includes a transceiver 710, a processor 720 and a memory 730. The memory 730 contains instructions executable by the processor 720 whereby the network device 700 is operative to perform the actions, e.g., of the procedure described earlier in conjunction with Fig. 3. Particularly, the memory 730 contains instructions executable by the processor 720 whereby the network device 700 is operative to receive a preamble from a terminal device, as a part of a random access message, on a random access occasion, the random access message further including a PUSCH; determine a PUSCH resource for the PUSCH based on the random access occasion or on the random access occasion and the preamble; and receive the PUSCH on the PUSCH resource.

In an embodiment, the operation of determining the PUSCH resource may include determining a time domain resource for the PUSCH based on a mapping between the time domain resource for the PUSCH and the random access occasion.

In an embodiment, the operation of determining the PUSCH resource includes determining a time domain resource for the PUSCH based on a mapping between the preamble and: a PUSCH mapping type, an offset relative to a time reference dependent on the random access occasion, a start symbol number of the PUSCH within a slot, and a duration of the PUSCH in the slot.

In an embodiment, the time reference may include: a slot used for the random access occasion, or one of a set of periodically occurring time instants that is selected based on its time distance from the random access occasion.

In an embodiment, the slot used for the random access occasion may be the last slot used for the random access occasion, or the one time instant may be one of the set of periodically occurring time instants that is closest to the random access occasion.

In an embodiment, the mapping may be predetermined by default.

In an embodiment, the memory 730 may further contain instructions executable by the processor 720 whereby the network device 700 is operative to transmit to the terminal device the mapping via RRC signaling. The RRC signaling may include a SIB and/or a dedicated signaling message.

In an embodiment, the PUSCH resource may be determined further based on one or more of: a combined duration of the preamble and the PUSCH, a service type/ use case, an SCS and a CP length for the PUSCH, or a frequency band in operation.

In an embodiment, the operation of determining the PUSCH resource may include determining, from a set of time domain resources associated with the random access occasion, a time domain resource for the PUSCH based on the preamble.

In an embodiment, the operation of determining the PUSCH resource may include determining a frequency domain resource for the PUSCH based on a mapping between the frequency domain resource for the PUSCH and the random access occasion.

In an embodiment, the operation of determining the PUSCH resource may include determining, from a set of frequency domain resources associated with the random access occasion, a frequency domain resource for the PUSCH based on the preamble.

In an embodiment, the frequency domain resource for the PUSCH may be determined further based on a frequency hopping configuration for the PUSCH.

In an embodiment, the frequency hopping configuration may be predetermined by default.

In an embodiment, the memory 730 may further contain instructions executable by the processor 720 whereby the network device 700 is operative to transmit the frequency hopping configuration to the terminal device via RRC signaling.

In an embodiment, the set of time domain resources and the set of frequency domain resources may constitute a set of time-frequency resources that are multiplexed with the random access occasion in a time division manner and multiplexed with each other in a time division, a frequency division and/or a code divisional manner.

In an embodiment, the random access message is a message in a two-step random access procedure.

The present disclosure also provides at least one computer program product in the form of a non-volatile or volatile memory, e.g., a non-transitory computer readable storage medium, an Electrically Erasable Programmable Read-Only Memory (EEPROM), a flash memory and a hard drive. The computer program product includes a computer program. The computer program includes: code/computer readable instructions, which when executed by the processor 520 causes the terminal device 500 to perform the actions, e.g., of the procedure described earlier in conjunction with Fig. 2; or code/computer readable instructions, which when executed by the processor 720 causes the network device 700 to perform the actions, e.g., of the procedure described earlier in conjunction with Fig. 3.

The computer program product may be configured as a computer program code structured in computer program modules. The computer program modules could essentially perform the actions of the flow illustrated in Fig. 2 or 3.

The processor may be a single CPU (Central Processing Unit), but could also comprise two or more processing units. For example, the processor may include general purpose microprocessors; instruction set processors and/or related chips sets and/or special purpose microprocessors such as Application Specific Integrated Circuits (ASICs). The processor may also comprise board memory for caching purposes. The computer program may be carried by a computer program product connected to the processor. The computer program product may comprise a non-transitory computer readable storage medium on which the computer program is stored. For example, the computer program product may be a flash memory, a Random Access Memory (RAM), a Read-Only Memory (ROM), or an EEPROM, and the computer program modules described above could in alternative embodiments be distributed on different computer program products in the form of memories.

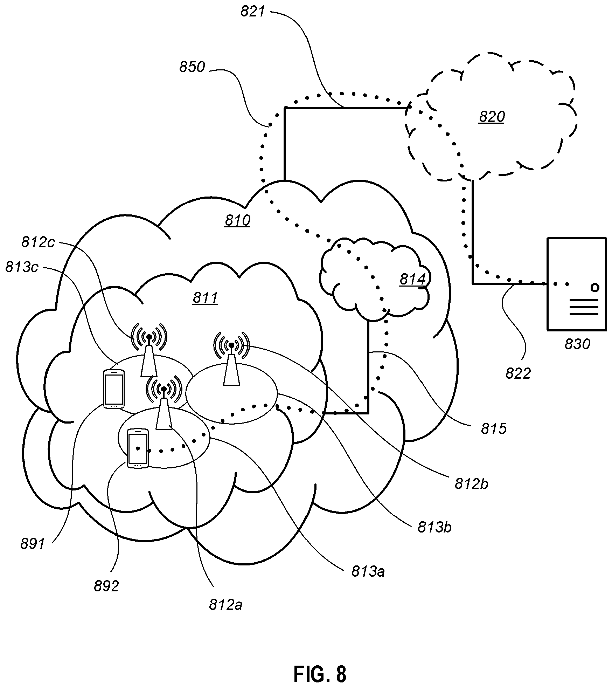

With reference to Fig. 8, in accordance with a non-claimed embodiment, a communication system includes a telecommunication network 810, such as a 3GPP-type cellular network, which comprises an access network 811, such as a radio access network, and a core network 814. The access network 811 comprises a plurality of base stations 812a, 812b, 812c, such as NBs, eNBs, gNBs or other types of wireless access points, each defining a corresponding coverage area 813a, 813b, 813c. Each base station 812a, 812b, 812c is connectable to the core network 814 over a wired or wireless connection 815. A first UE 891 located in a coverage area 813c is configured to wirelessly connect to, or be paged by, the corresponding base station 812c. A second UE 892 in a coverage area 813a is wirelessly connectable to the corresponding base station 812a. While a plurality of UEs 891, 892 are illustrated in this example, the disclosed embodiments are equally applicable to a situation where a sole UE is in the coverage area or where a sole UE is connecting to the corresponding base station 812.

The telecommunication network 810 is itself connected to a host computer 830, which may be embodied in the hardware and/or software of a standalone server, a cloud-implemented server, a distributed server or as processing resources in a server farm. The host computer 830 may be under the ownership or control of a service provider, or may be operated by the service provider or on behalf of the service provider. Connections 821 and 822 between the telecommunication network 810 and the host computer 830 may extend directly from the core network 814 to the host computer 830 or may go via an optional intermediate network 820. An intermediate network 820 may be one of, or a combination of more than one of, a public, private or hosted network; the intermediate network 820, if any, may be a backbone network or the Internet; in particular, the intermediate network 820 may comprise two or more sub-networks (not shown).

The communication system of Fig. 8 as a whole enables connectivity between the connected UEs 891, 892 and the host computer 830. The connectivity may be described as an over-the-top (OTT) connection 850. The host computer 830 and the connected UEs 891, 892 are configured to communicate data and/or signaling via the OTT connection 850, using the access network 811, the core network 814, any intermediate network 820 and possible further infrastructure (not shown) as intermediaries. The OTT connection 850 may be transparent in the sense that the participating communication devices through which the OTT connection 850 passes are unaware of routing of uplink and downlink communications. For example, the base station 812 may not or need not be informed about the past routing of an incoming downlink communication with data originating from the host computer 830 to be forwarded (e.g., handed over) to a connected UE 891. Similarly, the base station 812 need not be aware of the future routing of an outgoing uplink communication originating from the UE 891 towards the host computer 830.

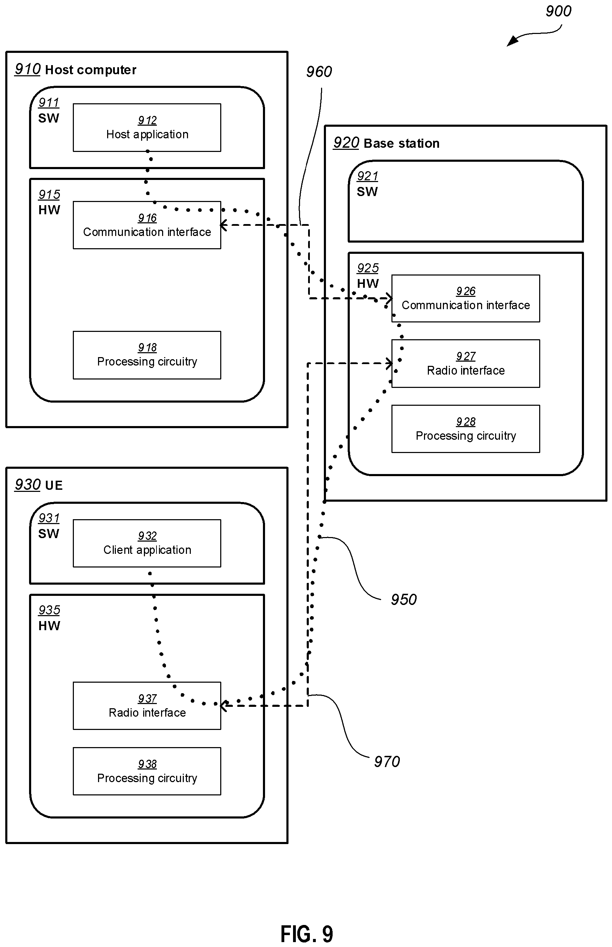

Example implementations, in accordance with a non-claimed embodiment, of the UE, base station and host computer discussed in the preceding paragraphs will now be described with reference to Fig. 9. In a communication system 900, a host computer 910 comprises hardware 915 including a communication interface 916 configured to set up and maintain a wired or wireless connection with an interface of a different communication device of the communication system 900. The host computer 910 further comprises a processing circuitry 918, which may have storage and/or processing capabilities. In particular, the processing circuitry 918 may comprise one or more programmable processors, application-specific integrated circuits, field programmable gate arrays or combinations of these (not shown) adapted to execute instructions. The host computer 910 further comprises software 911, which is stored in or accessible by the host computer 910 and executable by the processing circuitry 918. The software 911 includes a host application 912. The host application 912 may be operable to provide a service to a remote user, such as UE 930 connecting via an OTT connection 950 terminating at the UE 930 and the host computer 910. In providing the service to the remote user, the host application 912 may provide user data which is transmitted using the OTT connection 950.

The communication system 900 further includes a base station 920 provided in a telecommunication system and comprising hardware 925 enabling it to communicate with the host computer 910 and with the UE 930. The hardware 925 may include a communication interface 926 for setting up and maintaining a wired or wireless connection with an interface of a different communication device of the communication system 900, as well as a radio interface 927 for setting up and maintaining at least a wireless connection 970 with the UE 930 located in a coverage area (not shown in Fig. 9) served by the base station 920. The communication interface 926 may be configured to facilitate a connection 960 to the host computer 910. The connection 960 may be direct or it may pass through a core network (not shown in Fig. 9) of the telecommunication system and/or through one or more intermediate networks outside the telecommunication system. In the embodiment shown, the hardware 925 of the base station 920 further includes a processing circuitry 928, which may comprise one or more programmable processors, application-specific integrated circuits, field programmable gate arrays or combinations of these (not shown) adapted to execute instructions. The base station 920 further has software 921 stored internally or accessible via an external connection.

The communication system 900 further includes the UE 930 already referred to. Its hardware 935 may include a radio interface 937 configured to set up and maintain a wireless connection 970 with a base station serving a coverage area in which the UE 930 is currently located. The hardware 935 of the UE 930 further includes a processing circuitry 938, which may comprise one or more programmable processors, application-specific integrated circuits, field programmable gate arrays or combinations of these (not shown) adapted to execute instructions. The UE 930 further comprises software 931, which is stored in or accessible by the UE 930 and executable by the processing circuitry 938. The software 931 includes a client application 932. The client application 932 may be operable to provide a service to a human or non-human user via the UE 930, with the support of the host computer 910. In the host computer 910, an executing host application 912 may communicate with the executing client application 932 via the OTT connection 950 terminating at the UE 930 and the host computer 910. In providing the service to the user, the client application 932 may receive request data from the host application 912 and provide user data in response to the request data. The OTT connection 950 may transfer both the request data and the user data. The client application 932 may interact with the user to generate the user data that it provides.

It is noted that the host computer 910, the base station 920 and the UE 930 illustrated in Fig. 9 may be similar or identical to the host computer 830, one of base stations 812a, 812b, 812c and one of UEs 891, 892 of Fig. 8, respectively. This is to say, the inner workings of these entities may be as shown in Fig. 9 and independently, the surrounding network topology may be that of Fig. 8.

In Fig. 9, the OTT connection 950 has been drawn abstractly to illustrate the communication between the host computer 910 and the UE 930 via the base station 920, without explicit reference to any intermediary devices and the precise routing of messages via these devices. Network infrastructure may determine the routing, which it may be configured to hide from the UE 930 or from the service provider operating the host computer 910, or both. While the OTT connection 950 is active, the network infrastructure may further take decisions by which it dynamically changes the routing (e.g., on the basis of load balancing consideration or reconfiguration of the network).

Wireless connection 970 between the UE 930 and the base station 920 is in accordance with the teachings of the embodiments described throughout this disclosure. One or more of the various embodiments improve the performance of OTT services provided to the UE 930 using the OTT connection 950, in which the wireless connection 970 forms the last segment. More precisely, the teachings of these embodiments may improve the radio resource utilization and thereby provide benefits such as reduced user waiting time.

A measurement procedure may be provided for the purpose of monitoring data rate, latency and other factors on which the one or more embodiments improve. There may further be an optional network functionality for reconfiguring the OTT connection 950 between the host computer 910 and the UE 930, in response to variations in the measurement results. The measurement procedure and/or the network functionality for reconfiguring the OTT connection 950 may be implemented in software 911 and hardware 915 of the host computer 910 or in software 931 and hardware 935 of the UE 930, or both. In embodiments, sensors (not shown) may be deployed in or in association with communication devices through which the OTT connection 950 passes; the sensors may participate in the measurement procedure by supplying values of the monitored quantities exemplified above, or supplying values of other physical quantities from which the software 911, 931 may compute or estimate the monitored quantities. The reconfiguring of the OTT connection 950 may include message format, retransmission settings, preferred routing etc.; the reconfiguring need not affect the base station 920, and it may be unknown or imperceptible to the base station 920. Such procedures and functionalities may be known and practiced in the art. In certain embodiments, measurements may involve proprietary UE signaling facilitating the host computer 910's measurements of throughput, propagation times, latency and the like. The measurements may be implemented in that the software 911 and 931 causes messages to be transmitted, in particular empty or 'dummy' messages, using the OTT connection 950 while it monitors propagation times, errors etc.

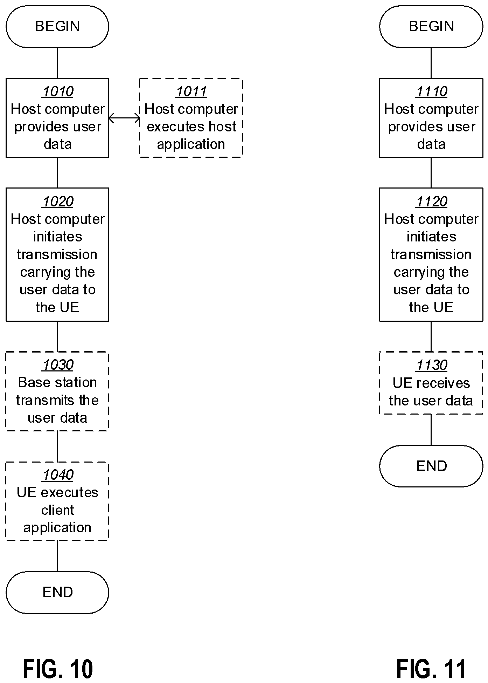

Fig. 10 is a flowchart illustrating a method implemented in a communication system, in accordance with a non-claimed embodiment. The communication system includes a host computer, a base station and a UE which may be those described with reference to Fig. 8 and Fig. 9. For simplicity of the present disclosure, only drawing references to Fig. 10 will be included in this section. In step 1010, the host computer provides user data. In substep 1011 (which may be optional) of step 1010, the host computer provides the user data by executing a host application. In step 1020, the host computer initiates a transmission carrying the user data to the UE. In step 1030 (which may be optional), the base station transmits to the UE the user data which was carried in the transmission that the host computer initiated, in accordance with the teachings of the embodiments described throughout this disclosure. In step 1040 (which may also be optional), the UE executes a client application associated with the host application executed by the host computer.

Fig. 11 is a flowchart illustrating a method implemented in a communication system, in accordance with a non-claimed embodiment. The communication system includes a host computer, a base station and a UE which may be those described with reference to Fig. 8 and Fig. 9. For simplicity of the present disclosure, only drawing references to Fig. 11 will be included in this section. In step 1110 of the method, the host computer provides user data. In an optional substep (not shown) the host computer provides the user data by executing a host application. In step 1120, the host computer initiates a transmission carrying the user data to the UE. The transmission may pass via the base station, in accordance with the teachings of the embodiments described throughout this disclosure. In step 1130 (which may be optional), the UE receives the user data carried in the transmission.

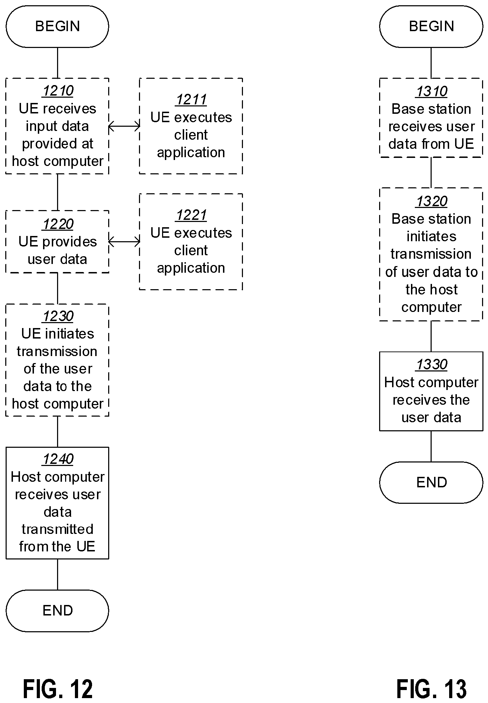

Fig. 12 is a flowchart illustrating a method implemented in a communication system, in accordance with a non-claimed embodiment. The communication system includes a host computer, a base station and a UE which may be those described with reference to Fig. 8 and Fig. 9. For simplicity of the present disclosure, only drawing references to Fig. 12 will be included in this section. In step 1210 (which may be optional), the UE receives input data provided by the host computer. Additionally or alternatively, in step 1220, the UE provides user data. In substep 1221 (which may be optional) of step 1220, the UE provides the user data by executing a client application. In substep 1211 (which may be optional) of step 1210, the UE executes a client application which provides the user data in reaction to the received input data provided by the host computer. In providing the user data, the executed client application may further consider user input received from the user. Regardless of the specific manner in which the user data was provided, the UE initiates, in substep 1230 (which may be optional), transmission of the user data to the host computer. In step 1240 of the method, the host computer receives the user data transmitted from the UE, in accordance with the teachings of the embodiments described throughout this disclosure.

Fig. 13 is a flowchart illustrating a method implemented in a communication system, in accordance with a non-claimed embodiment. The communication system includes a host computer, a base station and a UE which may be those described with reference to Fig. 8 and Fig. 9. For simplicity of the present disclosure, only drawing references to Fig. 13 will be included in this section. In step 1310 (which may be optional), in accordance with the teachings of the embodiments described throughout this disclosure, the base station receives user data from the UE. In step 1320 (which may be optional), the base station initiates transmission of the received user data to the host computer. In step 1330 (which may be optional), the host computer receives the user data carried in the transmission initiated by the base station.

**Claims**

1. A method (200) in a terminal device, comprising:

    determining (210) a preamble to be transmitted to a network device on a random access occasion;
    determining (220) a resource for transmitting a Physical Uplink Shared Channel, PUSCH, based on the random access occasion, comprising:

        - determining a time domain resource for the PUSCH based on a mapping between the preamble and:

            -- a PUSCH mapping type,
            -- an offset relative to a time reference dependent on the random access occasion,
            -- a start symbol number of the PUSCH within a slot, and
            -- a duration of the PUSCH in the slot; and

    transmitting (230), to the network device, the preamble on the random access occasion and the PUSCH on the resource, in a random access message being a message A in a two-step random access procedure.

2. The method (200) of claim 1, wherein the time reference comprises:

    a slot used for the random access occasion, or
    one of a set of periodically occurring time instants that is selected based on its time distance from the random access occasion;

3. The method (200) of claim 2, wherein the slot used for the random access occasion is the last slot used for the random access occasion, or the one time instant is one of the set of periodically occurring time instants that is closest to the random access occasion.

4. The method (200) of any one of claims 1 to 3, wherein the mapping is received from the network device via Radio Resource Control, RRC, signaling, the RRC signaling comprising a System Information Block, SIB, and/or a dedicated signaling message.

5. The method (200) of any of claims 1 to 4, wherein determining (220) the resource comprises determining a frequency domain resource for the PUSCH based on a mapping between the frequency domain resource for the PUSCH and the random access occasion.

6. The method (200) of any of claims 1 to 5, wherein the resource is determined further based on one or more of:

    a combined duration of the preamble and the PUSCH,
    a service type,
    a resource used for the PUSCH previously,
    a Sub-Carrier Spacing, SCS, and a Cyclic Prefix, CP, length for the PUSCH, or
    a frequency band in operation.

7. A computer readable storage medium having computer program instructions stored thereon, the computer program instructions, when executed by a processor in a terminal device, causing the terminal device to perform the method according to any of claims 1 to 6.

8. A terminal device (500), comprising a transceiver (510), a processor (520) and a memory (530), the memory (530) comprising instructions executable by the processor (520) whereby the terminal device (500) is operative to perform the method according to any of claims 1 to 6.

9. A method (300) in a network device, comprising:

receiving (310) a preamble from a terminal device, as a part of a random access message, on a random access occasion, the random access message further comprising a Physical Uplink Shared Channel, PUSCH, wherein the random access message is a message A in a two-step random access procedure;
determining (320) a resource for the PUSCH based on the random access occasion, comprising:

- determining a time domain resource for the PUSCH based on a mapping between the preamble and:

-- a PUSCH mapping type,
-- an offset relative to a time reference dependent on the random access occasion,
-- a start symbol number of the PUSCH within a slot, and
-- a duration of the PUSCH in the slot; and

receiving (330) the PUSCH on the resource.

10. The method (300) of claim 9, wherein the time reference comprises:

a slot used for the random access occasion, or
one of a set of periodically occurring time instants that is selected based on its time distance from the random access occasion.

11. The method (300) of claim 10, wherein the slot used for the random access occasion is the last slot used for the random access occasion, or the one time instant is one of the set of periodically occurring time instants that is closest to the random access occasion.

12. A computer readable storage medium having computer program instructions stored thereon, the computer program instructions, when executed by a processor in a network device, causing the network device to perform the method according to any of claims 9 to 11.

13. A network device (700), comprising a transceiver (710), a processor (720) and a memory (730), the memory (730) comprising instructions executable by the processor (720) whereby the network device (700) is operative to perform the method according to any of claims 9 to 11.


**Patentansprüche**

1. Verfahren (200) in einer Endgerätevorrichtung, umfassend:

Bestimmen (210) einer Präambel, die bei einer Direktzugriffsgelegenheit an eine Netzwerkvorrichtung gesendet werden soll;
Bestimmen (220) einer Ressource zum Senden eines gemeinsamen physikalischen Uplink-Kanals, PUSCH, basierend auf der Direktzugriffsgelegenheit; umfassend:

- Bestimmen einer Zeitdomänenressource für den PUSCH basierend auf einer Zuordnung zwischen der Präambel und:

-- einem PUSCH-Zuordnungstyp,
-- einem Offset relativ zu einer Zeitreferenz in Abhängigkeit von der Direktzugriffsgelegenheit,
-- einer Startsymbolnummer des PUSCH innerhalb eines Schlitzes und
-- einer Dauer des PUSCH im Schlitz; und

Senden (230) der Präambel bei der Direktzugriffsgelegenheit und des PUSCH auf der Ressource in einer Direktzugriffsnachricht, die eine Nachricht A in einer zweistufigen Direktzugriffsprozedur ist, an den Netzwerk-

16

knoten.

**2.** Verfahren (200) nach Anspruch 1, wobei die Zeitreferenz umfasst:

einen Schlitz, der für die Direktzugriffsgelegenheit verwendet wird, oder
einen aus einem Satz von periodisch eintretenden Zeitpunkten, der basierend auf seinem zeitlichen Abstand von der Direktzugriffsgelegenheit ausgewählt wird.

**3.** Verfahren (200) nach Anspruch 2, wobei der Schlitz, der für die Direktzugriffsgelegenheit verwendet wird, der letzte Schlitz ist, der für die Direktzugriffsgelegenheit verwendet wird, oder der eine Zeitpunkt einer aus dem Satz von periodisch eintretenden Zeitpunkten ist, der der Direktzugriffsgelegenheit am nächsten ist.

**4.** Verfahren (200) nach einem der Ansprüche 1 bis 3, wobei die Zuordnung von der Netzwerkvorrichtung über Funkressourcensteuerungssignalisierung, RRC-Signalisierung, empfangen wird, wobei die RRC-Signalisierung einen Systeminformationsblock, SIB, und/oder eine dedizierte Signalisierungsnachricht umfasst.

**5.** Verfahren (200) nach einem der Ansprüche 1 bis 4, wobei das Bestimmen (220) der Ressource ein Bestimmen einer Frequenzdomänenressource für den PUSCH basierend auf einer Zuordnung zwischen der Frequenzdomänenressource für den PUSCH und der Direktzugriffsgelegenheit umfasst.

**6.** Verfahren (200) nach einem der Ansprüche 1 bis 5, wobei die Ressource ferner basierend auf einem oder mehreren bestimmt wird von:

einer kombinierten Dauer der Präambel und des PUSCH,
einem Diensttyp,
einer Ressource, die für den PUSCH zuvor verwendet wurde,
einem Unterträgerabstand, SCS, und einer Länge eines zyklischen Präfixes, CP, für den PUSCH oder
einem Frequenzband in Betrieb.

**7.** Computerlesbares Speichermedium mit darauf gespeicherten Computerprogrammanweisungen, wobei die Computerprogrammanweisungen bei Ausführung durch einen Prozessor in einer Endgerätevorrichtung die Endgerätevorrichtung zum Durchführen des Verfahrens nach einem der Ansprüche 1 bis 6 veranlassen.

**8.** Endgerätevorrichtung (500), umfassend einen Sendeempfänger (510), einen Prozessor (520) und einen Speicher (530), wobei der Speicher Anweisungen (530) umfasst, die vom Prozessor (520) ausgeführt werden können, wodurch die Endgerätevorrichtung (500) zum Durchführen des Verfahrens nach einem der Ansprüche 1 bis 6 ausgelegt ist.

**9.** Verfahren (300) in einer Netzwerkvorrichtung, umfassend:

Empfangen (310) einer Präambel von einer Endgerätevorrichtung als Teil einer Direktzugriffsnachricht bei einer Direktzugriffsgelegenheit, wobei die Direktzugriffsnachricht ferner einen gemeinsamen physikalischen Uplink-Kanal, PUSCH, umfasst, wobei die Direktzugriffsnachricht eine Nachricht A in einer zweistufigen Direktzugriffsprozedur ist;
Bestimmen (320) einer Ressource für den PUSCH basierend auf der Direktzugriffsgelegenheit; umfassend:

- Bestimmen einer Zeitdomänenressource für den PUSCH basierend auf einer Zuordnung zwischen der Präambel und:

-- einem PUSCH-Zuordnungstyp,
-- einem Offset relativ zu einer Zeitreferenz in Abhängigkeit von der Direktzugriffsgelegenheit,
-- einer Startsymbolnummer des PUSCH innerhalb eines Schlitzes und
-- einer Dauer des PUSCH im Schlitz; und

Empfangen (330) des PUSCH auf der Ressource.

**10.** Verfahren (300) nach Anspruch 9, wobei die Zeitreferenz umfasst:

einen Schlitz, der für die Direktzugriffsgelegenheit verwendet wird, oder

einen aus einem Satz von periodisch eintretenden Zeitpunkten, der basierend auf seinem zeitlichen Abstand von der Direktzugriffsgelegenheit ausgewählt wird.

11. Verfahren (300) nach Anspruch 10, wobei der Schlitz, der für die Direktzugriffsgelegenheit verwendet wird, der letzte Schlitz ist, der für die Direktzugriffsgelegenheit verwendet wird, oder der eine Zeitpunkt einer aus dem Satz von periodisch eintretenden Zeitpunkten ist, der der Direktzugriffsgelegenheit am nächsten ist.

12. Computerlesbares Speichermedium mit darauf gespeicherten Computerprogrammanweisungen, wobei die Computerprogrammanweisungen bei Ausführung durch einen Prozessor in einer Netzwerkvorrichtung die Netzwerkvorrichtung zum Durchführen des Verfahrens nach einem der Ansprüche 9 bis 11 veranlassen.

13. Netzwerkvorrichtung (700), umfassend einen Sendeempfänger (710), einen Prozessor (720) und einen Speicher (730), wobei der Speicher Anweisungen (730) umfasst, die vom Prozessor (720) ausgeführt werden können, wodurch die Netzwerkvorrichtung (700) zum Durchführen des Verfahrens nach einem der Ansprüche 9 bis 11 ausgelegt ist.

**Revendications**

1. Procédé (200) dans un dispositif terminal, comprenant :

la détermination (210) d'un préambule à transmettre à un dispositif de réseau à une occasion d'accès aléatoire ;
la détermination (220) d'une ressource pour transmettre un canal partagé de liaison montante physique, PUSCH, sur la base de l'occasion d'accès aléatoire, comprenant :

- la détermination d'une ressource de domaine temporel pour le PUSCH sur la base d'un mappage entre le préambule et :

-- un type de mappage de PUSCH,
-- un décalage par rapport à une référence temporelle en fonction de l'occasion d'accès aléatoire,
-- un numéro de symbole de début du PUSCH à l'intérieur d'un créneau, et
-- une durée du PUSCH dans le créneau ; et

la transmission (230), au dispositif de réseau, du préambule à l'occasion d'accès aléatoire et du PUSCH sur la ressource, dans un message d'accès aléatoire qui est un message A dans une procédure d'accès aléatoire à deux étapes.

2. Procédé (200) selon la revendication 1, dans lequel la référence temporelle comprend :

un créneau utilisé pour l'occasion d'accès aléatoire, ou
l'un d'un ensemble d'instants temporels survenant périodiquement qui est sélectionné sur la base de sa distance temporelle par rapport à l'occasion d'accès aléatoire.

3. Procédé (200) selon la revendication 2, dans lequel le créneau utilisé pour l'occasion d'accès aléatoire est le dernier créneau utilisé pour l'occasion d'accès aléatoire, ou l'instant temporel est l'un de l'ensemble d'instants temporels survenant périodiquement qui est le plus proche de l'occasion d'accès aléatoire.

4. Procédé (200) selon l'une quelconque des revendications 1 à 3, dans lequel le mappage est reçu depuis le dispositif de réseau via une signalisation de commande de ressources radio, RRC, la signalisation RRC comprenant un bloc d'informations système, SIB, et/ou un message de signalisation dédié.

5. Procédé (200) selon l'une quelconque des revendications 1 à 4, dans lequel la détermination (220) de la ressource comprend la détermination d'une ressource de domaine fréquentiel pour le PUSCH sur la base d'un mappage entre la ressource de domaine fréquentiel pour le PUSCH et l'occasion d'accès aléatoire.

6. Procédé (200) selon l'une quelconque des revendications 1 à 5, dans lequel la ressource est en outre déterminée sur la base d'un ou plusieurs parmi :

une durée combinée du préambule et du PUSCH,

un type de service,
une ressource précédemment utilisée pour le PUSCH,
un espacement de sous-porteuses, SCS, et une longueur de préfixe cyclique, CP, pour le PUSCH, ou
une bande de fréquences en fonctionnement.

7. Support de stockage lisible par ordinateur sur lequel sont stockées des instructions de programme informatique qui, lorsqu'elles sont exécutées par un processeur dans un dispositif terminal, amènent le dispositif terminal à réaliser le procédé selon l'une quelconque des revendications 1 à 6.

8. Dispositif terminal (500), comprenant un émetteur-récepteur (510), un processeur (520) et une mémoire (530), la mémoire (530) comprenant des instructions exécutables par le processeur (520) de telle manière que le dispositif terminal (500) soit fonctionnel pour réaliser le procédé selon l'une quelconque des revendications 1 à 6.

9. Procédé (300) dans un dispositif de réseau, comprenant :

la réception (310) d'un préambule depuis un dispositif terminal, dans le cadre d'un message d'accès aléatoire, à une occasion d'accès aléatoire, le message d'accès aléatoire comprenant en outre un canal partagé de liaison montante physique, PUSCH, dans lequel le message d'accès aléatoire est un message A dans une procédure d'accès aléatoire à deux étapes ;
la détermination (320) d'une ressource pour le PUSCH sur la base de l'occasion d'accès aléatoire, comprenant :

- la détermination d'une ressource de domaine temporel pour le PUSCH sur la base d'un mappage entre le préambule et :

-- un type de mappage de PUSCH,
-- un décalage par rapport à une référence temporelle en fonction de l'occasion d'accès aléatoire,
-- un numéro de symbole de début du PUSCH à l'intérieur d'un créneau, et
-- une durée du PUSCH dans le créneau ; et

la réception (330) du PUSCH sur la ressource.

10. Procédé (300) selon la revendication 9, dans lequel la référence temporelle comprend :

un créneau utilisé pour l'occasion d'accès aléatoire, ou
l'un d'un ensemble d'instants temporels survenant périodiquement qui est sélectionné sur la base de sa distance temporelle par rapport à l'occasion d'accès aléatoire.

11. Procédé (300) selon la revendication 10, dans lequel le créneau utilisé pour l'occasion d'accès aléatoire est le dernier créneau utilisé pour l'occasion d'accès aléatoire, ou l'instant temporel est l'un de l'ensemble d'instants temporels survenant périodiquement qui est le plus proche de l'occasion d'accès aléatoire.

12. Support de stockage lisible par ordinateur sur lequel sont stockées des instructions de programme informatique qui, lorsqu'elles sont exécutées par un processeur dans un dispositif de réseau, amènent le dispositif de réseau à réaliser le procédé selon l'une quelconque des revendications 9 à 11.

13. Dispositif de réseau (700), comprenant un émetteur-récepteur (710), un processeur (720) et une mémoire (730), la mémoire (730) comprenant des instructions exécutables par le processeur (720) de telle manière que le dispositif de réseau (700) soit fonctionnel pour réaliser le procédé selon l'une quelconque des revendications 9 à 11.

UE ——— gNB

101. Sync Signal

102. MIB + SIB

111. PRACH preamble

112. RAR

113. PUSCH

114. CRM

**Fig. 1A**

UE ——— gNB

101. Sync Signal

102. MIB + SIB

121. Message A
(Preamble + PUSCH)

122. Message B

**Fig. 1B**

210

Determine a preamble to be transmitted to a
network device on a random access occasion

220

Determine a PUSCH resource for transmitting a
PUSCH based on the random access occasion or
on the random access occasion and the preamble

230

Transmit to the network device the preamble on
the random access occasion and the PUSCH on
the PUSCH resource, in a random access
message

200

**Fig. 2**

310

Receive a preamble from a terminal device, as a
part of a random access message, on a random
access occasion, the random access message
further comprising a PUSCH

320

Determine a PUSCH resource for the PUSCH
based on the random access occasion or on the
random access occasion and the preamble

330

Receive the PUSCH on the PUSCH resource

300

**Fig. 3**

FIRST
DETERMINING UNIT
410

SECOND
DETERMINING UNIT
420

TRANSMITTING UNIT
430

TERMINAL DEVICE
400

**Fig. 4**

TRANSCEIVER
510

PROCESSOR
520

MEMORY
530

TERMINAL DEVICE
500

**Fig. 5**

FIRST RECEIVING
UNIT
610

DETERMINING UNIT
620

SECOND RECEIVING
UNIT
630

NETWORK DEVICE
600

**Fig. 6**

TRANSCEIVER
710

PROCESSOR
720

MEMORY
730

NETWORK DEVICE
700

**Fig. 7**

FIG. 8

*900*

**910 Host computer**

**911 SW**

**912 Host application**

**915 HW**

**916 Communication interface**

**918 Processing circuitry**

*960*

**920 Base station**

**921 SW**

**925 HW**

**926 Communication interface**

**927 Radio interface**

**928 Processing circuitry**

**930 UE**

**931 SW**

**932 Client application**

**935 HW**

**937 Radio interface**

**938 Processing circuitry**

*950*

*970*

FIG. 9

BEGIN

**1010**
Host computer provides user data

**1011**
Host computer executes host application

**1020**
Host computer initiates transmission carrying the user data to the UE

**1030**
Base station transmits the user data

**1040**
UE executes client application

END

**FIG. 10**

BEGIN

**1110**
Host computer provides user data

**1120**
Host computer initiates transmission carrying the user data to the UE

**1130**
UE receives the user data

END

**FIG. 11**

BEGIN

---

**1210**
UE receives input data provided at host computer

**1211**
UE executes client application

**1220**
UE provides user data

**1221**
UE executes client application

**1230**
UE initiates transmission of the user data to the host computer

**1240**
Host computer receives user data transmitted from the UE

END

**FIG. 12**

---

BEGIN

**1310**
Base station receives user data from UE

**1320**
Base station initiates transmission of user data to the host computer

**1330**
Host computer receives the user data

END

**FIG. 13**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3913838 A1
- EP 3927063 A1

- WO 2018135631 A1
- EP 3573411 A1

**Non-patent literature cited in the description**

- **INTERDIGITAL.** 2-Step RACH Procedure. *3GPP draft, R2-1814008*